# EUROPEAN PATENT APPLICATION

(11) **EP 2 186 408 A1**
(43) Date of publication of application: **19.05.2010**
(21) Application number: 09252459.4
(22) Date of filing: 21.10.2009
(51) Int. Cl.: A01N 25/34, A01N 59/00, A01N 59/16

(54) **Article with antibacterial characteristics**

(30) Priority: 21.10.2008 GB 0819239
(71) Applicant: Centurion Europe Ltd, Hunt Lane Doncaster DN5 9SE (GB)
(72) Inventor: Kantecki, Paul, Doncaster, DN5 9SE (GB)
(74) Representative: Wood, Graham

(57) **Abstract**

The invention relates to an article which is formed of or provided with at least one surface which contains silver ions. The article can be in the form of a protective wallet or folder or a sign, notice board or the like, and at least an external surface of the same is provided of a material including said silver ions. This ensures that the said surfaces are resistant to harmful bacteria and also greatly reduces the need for cleaning of the same, thus saving cleaning expenditure and personnel in environments such as schools, hospitals and the like where the articles are used.

## Description

The invention which is the subject of this application relates to the provision of an article such as, an article into which a further item is to be placed for protection and/or viewing and/or an article which in itself is provided to be viewed such as a warning sign, information sign or the like. Conventionally, articles of the type described above, are used by more than one person which, in turn, makes them susceptible to transferring bacteria from person to person. For example, a wallet or folder in which information is stored, may be transferred between various staff, for example, staff in a hospital, and the transfer of this article, if the same carries harmful bacteria thereon, may allow the transfer of the bacteria from person to person. Similarly, an article such as a sign which is required to be viewed, has an external surface which may be touched by persons as they pass the sign such as for example if the sign is placed on a door which is required to be pushed to be opened or closed.

Conventionally, attempts to minimise, the risk of transfer of harmful bacteria, has been to implement stringent cleaning routines and/or require particularly strong cleaning media to be used which in itself, can be harmful. These cleaning routines are time consuming and often divert staff from areas where they may be more usefully utilised. Furthermore, the cleaning materials used, can be expensive and represent a significant drain on what can often be limited resources.

It should also be noted that even with these stringent cleaning routines and frequent cleaning, the articles in question are still found to be capable of harbouring potentially harmful bacteria.

The aim of the present invention is therefore to provide an article in a form which allows the same to be resistant to the carrying of at least some forms of harmful bacteria and, in certain instances, to actively kill the said bacteria if present on the articles and/or items to be placed therewith.

In a first aspect of the invention, there is provided an article, said article having at least one surface which is externally viewable in use, and wherein at least said one surface is formed by a material including therein, or coated with a material including, silver ions.

In one embodiment, the silver ions are dispersed within a material in a predetermined quantity and/or over time so as to provide the required effect across the external surface.

In one embodiment, only the external surface of the article is provided with material incorporating the silver ions, or, alternatively, the entire article may be formed of material incorporating the silver ions therein.

In one embodiment, the silver ions are provided in a material which is applied to the external face of the article to form an external coating thereon.

In an alternative embodiment, the silver ions are provided within the material from which the article is subsequently formed, such as, for example, by extrusion.

In one embodiment, the article is a folder or wallet provided with an external surface through which an item placed into the folder or wallet can be viewed. In one embodiment, in addition to the external face being provided with the silver ions, it is ensured that the silver ions are also located so as to be exposed to the item held within the folder or wallet, thereby acting on the item to resist contamination and, preferably, to kill bacteria carried on said item.

In one embodiment, the provision of the silver ions within the material, prevents bacteria such as E-Coli and MRSA from being present on the article and in certain instances, if already present on the article, kills the same. Thus, in accordance with the invention, the need to clean and/or cleaning media required to be used, is reduced and/or can be changed.

In a further embodiment, when the article is a sign, the external face is formed or coated with said material incorporating silver ions and the rear face is provided with adhesive to allow the same to be adhered to a surface. Typically, the rear face does not need to be coated as the layer of adhesive forms a seal around the peripheral edge of the article so as to prevent the ingress of bacteria to the rear of the sign.

It should be appreciated that the use of the material with the silver ions dispersed therethrough can be used for any of the articles. For example, other articles such as signs, notice boards and laminating sheets may be formed of the sheet material in accordance with the invention.

Also, the sheet material can be transparent for use for example with folders or wallets or laminating sheets where it is necessary to view an item through the same, or may be translucent for other purposes such as signs or notice boards.

Typically, when the material is used as a laminating sheet the same can be provided in a roll with a layer of adhesive on one side so as to allow the sheet to be attached to the item to be laminated and/or to a support surface onto which the laminated sheet is to be adhered and the silver ions are dispersed through the sheet material.

Typically, when used to form a notice board, the sheet material is provided with an external surface onto which ink can be applied via pens in a conventional manner such that the normal usage of the article is not affected by the provision of the silver ions.

In one embodiment the silver ions are emitted over time from silver particles located within the said material. In one embodiment the particle size is in the range of 2-4um and the particles are used in the sheet material at levels in the range of 0.05% to 0.3%.

In one embodiment any or any combination of MRSA, E.Coli, Salmonella, Listeria, Pseudomonas, and/or Aspergillus Niger are controlled by the use of the silver ions in the said article.

Specific embodiments of the invention are now described with reference to the accompanying drawings wherein;
Figure 1 illustrates an article in accordance with one embodiment of the invention;
Figure 2 illustrates a cross-sectional view along line AA of figure 1;
Figure 3 illustrates a further article in accordance with the invention; and
Figure 4 illustrates a cross-section along line BB of figure 3.

The use of the material including the silver ions, provides a robust anti-microbial surface that cannot be washed off and does not lead to bacterial strains developing a resistance. Silver ions have microbiocidal properties, which means they are lethal to single celled micro-organisms, but harmless to humans. Research has shown that silver ions can eliminate and prevent the spread of nearly 150 strains of bacteria. They have also been found to inhibit growth and spread MRSA and E-Coli.

Silver ions act against microbes in a number of ways. The silver ions may bind nonspecifically to cell surfaces, causing some disruption to the cellular membrane function and allow the silver ions to penetrate the microbe structure. They are also highly reactive and readily bind to electron donor groups, such as the thiol groups (-SH) which are commonly found in enzymes within the microbe. This causes the enzymes to be denatured thus effectively incapacitating the energy source of the cell. As a result the cell cannot maintain osmotic pressure, vital substances leak out of the cell and the microbe will quickly die. Silver ions also react with the base pairs of DNA thus preventing DNA replication.

In one embodiment, the silver ions are provided from a clear silver glass powder. The powder is inorganic in nature, has a small particle size and high temperature tolerance. The powder allows the release of silver ions from the sparingly soluble glass matrix, which in turn safely inhibits microbial growth. This slow release of the silver ions provides long term activity and hence protection for the article incorporating the same.

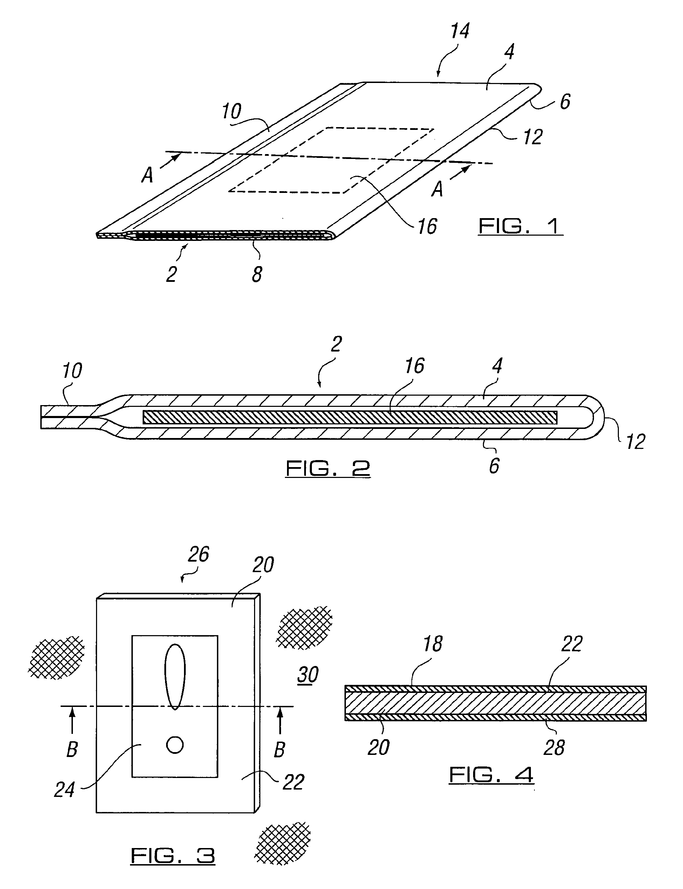

Referring now to figures 1 and 2, there is provided an article in the form of a wallet or folder 2. The wallet or folder has a first layer of sheet material which forms one external face 4 and a second layer of sheet material which forms the opposing external face 6. Typically, the said sheet material is formed from a unitary sheet material which is joined along edges 8 and 10 and folded along edge, 12 leaving opening 14. At the opening, the respective sheet material layers can be pulled apart to allow an item, such as for example, a sheet of paper 16 to be placed into the wallet or folder. In one use, the sheet of paper may carry instructions, information or records such as for example the records of a particular patient in a hospital which are required to be referred to by one or typically a number of members of staff. It will be appreciated that in hospitals, where hygiene is particular important, it is important that the transfer of the wallet between the different members of staff does not cause the transfer of harmful bacteria between staff and potentially to the patient.

In accordance with the invention, the material from which the wallet is manufactured, is a substantially transparent plastics material which is extruded. In addition to the plastics material, the same includes a plurality of silver ions which are dispersed throughout the material prior to formation of the wallet or folder and hence throughout the layers 4,6 of the folder. The provision of these silver ions, is found to prevent and/or kill the growth and carrying of bacteria on the article. Thus, in this embodiment, the external faces of the folder do not carry forms of potential harmful bacteria, and in addition, the item 16 held within the folder, if the same has harmful bacteria thereon prior to entering the folder, is prevented from growing bacteria or retaining bacteria thereon due to the fact that it is placed into the folder 2 and in contact with the silver ions of the folder material. Thus, by providing the folder formed of the said material, including silver ions there is provided a significant reduction in the risk of carrying and transfer of bacteria.

Referring now to figures 3 and 4, there is illustrated a sign 20 which has an external face 22 on which the sign information 24 is displayed and a rear face 26 which has a layer of adhesive 28 thereon so as to allow the sign to be adhered to a support surface 30 from which the information is to be viewed.

In this embodiment of the invention, the sign is formed from a planer sheet material, typically of plastics but not necessarily so, and the external viewable face, has a layer of material 18 incorporating silver ions therein, applied thereto. This layer therefore forms the external face of the sign and the provision of the silver ions prevents the growth or retention of bacteria thereon.

The rear face of the sign may have material incorporating silver particles applied thereto but, it is typically not necessary due to the fact that the rear surface is sealed from exposure to the external environment by the layer of adhesive when the sign is applied to the support surface.

The use of the material including the silver ions, provides a robust anti-microbial surface that cannot be washed off and does not lead to bacterial strains developing a resistance. Silver ions have microbiocidal properties, which means they are lethal to single celled micro-organisms, but harmless to humans. Research has shown that silver ions can eliminate and prevent the spread of nearly 150 strains of bacteria. They have also been found to inhibit growth and spread MRSA and E-Coli.

Trials on signs in accordance with the invention in comparison with conventional signs have identified significantly beneficial results as indicated in Table A below:
The method used was to determine Antibacterial Activity using Tests Based on JIS Z 2801:2000)
RESULTS (AS CFU CM -2)

| SAMPLE | ORGANISM | CONTACT | TIME | LOG REDUCTION | % REDUCTION |
|---|---|---|---|---|---|
| Sign of the invention | Escherichia coli | 1.6E+04 | <11.11 | >4.70 | >99.99% |
| Conventional sign | Escherichia coli | 1.6E+04 | 5.6E+-05 | | |
| Sign of the invention | MRSA | 2.0E+03 | <11.11 | >2.60 | >99.75% |
| Conventional sign | MRSA | 2.0E+03 | 4.4E+03 | | |

The above data shows the difference in the population following contact with the surface of the samples listed for 24 hours at 35°C under a RH of >95% relative to the control sample.

The results of these test illustrate the clear advantages which can be obtained in controlling and reducing bacteria, in this case MRSA and Escherichia Coli when the signs, or other articles as herein defined are provided to include at least an external face including a material which passes silver ions into the same in accordance with the invention.

## Claims

1. An article, said article having at least one surface which is externally viewable in use and wherein said at least one surface is formed by a material including therein, or coated with a material including, silver ions.

2. An article according to claim 1 wherein the silver ions are dispersed within the material in a predetermined quantity and/or over time so as to provide an effect across the external surface.

3. An article according to claim 1 wherein only the external surface of the article is provided with material incorporating the silver ions.

4. An article according to claim 1 wherein the article is formed from material incorporating the silver ions therein.

5. An article according to claim 1 wherein the article is subsequently formed from the material by extrusion of the same.

6. An article according to claim 1 wherein the silver ions are provided in a material which is applied to the external face of the article to form an external coating thereon.

7. An article according to any of the preceding claims wherein the article is a folder or wallet provided with an external surface through which an item placed into the folder or wallet can be viewed.

8. An article according to claim 7 wherein the external surface includes silver ions.

9. An article according to claim 7 or 8 wherein silver ions are located so as to be exposed to any item held within the folder or wallet, thereby acting on the item to resist contamination and/or kill bacteria carried on said item.

10. An article according to claim 1 wherein the article is a sign, notice board and/or laminated sheet and at least the external viewable face thereof is formed or coated with a material incorporating silver ions.

11. An article according to claim 10 wherein the rear face of the sign is provided with adhesive which forms a seal around the peripheral edge of the article so as to prevent the ingress of bacteria to the rear of the sign.

12. An article according to claim 1 wherein the material including the silver ions is a sheet material which can be adhered to an article.

13. An article according to claim 12 wherein the sheet material has a layer of adhesive on one side so as to allow the sheet material to the article

14. An article according to any of the preceding claims wherein the silver ions are emitted from silver particles provided in the said material.

15. An article according to claim 14 wherein the silver particles are provided as part of a glass powder added to said material.

16. An article according to claim 14 wherein the particles are provided within the range of a mean particle size of 2-4um.

17. An article according to claim 14 wherein the particles are provided within the material at a level of 0.05% to 0.3%.
